# EUROPÄISCHE PATENTANMELDUNG

(11) **EP 4 037 176 A1**
(43) Veröffentlichungstag der Anmeldung: **03.08.2022**
(21) Anmeldenummer: 21154385.5
(22) Anmeldetag: 29.01.2021
(51) Int. Cl.: H02M 7/483, H02M 7/00

(54) **KOMMUTIERUNGSZELLE, FLYING CAPACITOR MODUL UND MULTILEVEL-UMRICHTER**

(71) Anmelder: Siemens Aktiengesellschaft, 80333 München (DE)
(72) Erfinder: Hartwig, Raphael, 92342 Freystadt (DE); Hensler, Alexander, 91466 Gerhardshofen (DE)

(57) **Zusammenfassung**

Die Erfindung betrifft eine Kommutierungszelle (1) für ein Flying Capacitor Modul (2), aufweisend einen ersten Halbleiter (3) mit einem ersten und zweiten Anschluss (4,5) und einen zweiten Halbleiter (6) mit einem dritten und vierten Anschluss (7,8), einen ersten, zweiten, dritten und vierten Kondensator (9,10,11,12) und eine Leiterplatte (13), wobei der erste Halbleiter (3) in einer ersten Gleichspannungsphase (14) und der zweite Halbleiter (6) in einer zweiten Gleichspannungsphase (15) verschaltet ist, der erste und zweite Kondensator (9,10) jeweils zwischen dem ersten und dritten Anschluss (4,7) und der dritte und vierte Kondensator (11,12) jeweils zwischen dem zweiten und vierten Anschluss (5,8) parallel zueinander verschaltet sind, auf einer ersten Seite (16) der Leiterplatte (13) der erste und dritte Kondensator (9,11) und auf einer der ersten Seite (16) abgewandten zweiten Seite (17) der Leiterplatte (13) der zweite und vierte Kondensator (10,12) angeordnet sind, die Kondensatoren (9,11) auf der ersten Seite (16) mit den Kondensatoren (10,12) auf der zweiten Seite (17) mittels Durchkontaktierungen (18,19,20,21) an den Anschlüssen (4,5,7,8) verschaltet sind und mittels Verschaltung und Anordnung der Kondensatoren (9,10,11,12) ein erster Kommutierungspfad (22) auf der ersten Seite (16) und ein zweiter, dritter und vierter Kommutierungspfad (23,24,25) entlang der Durchkontaktierungen (18,19,20,21) und auf der ersten und zweiten Seite (16,17) ausgebildet sind. Weiterhin betrifft die Erfindung das Flying Capacitor Modul (2) mit der Kommutierungszelle (1) und einen Multilevel-Umrichter (35) mit dem Flying Capacitor Modul (2).

## Beschreibung

Die Erfindung betrifft eine Kommutierungszelle, ein Flying Capacitor Modul mit der Kommutierungszelle und einen Multilevel-Umrichter mit dem Flying Capacitor Modul.

Multilevel-Umrichter kommen insbesondere im industriellen Umfeld der Antriebstechnik aber auch im Bereich der Energieversorgung dann zum Einsatz, wenn neben einer gefordert hohen Ausgangswechselspannungen für die Umrichter auch eine hohe Qualität der sinusförmigen Ausgangswechselspannungen bei einem geringem Aufwand an Filtern beansprucht wird.

Insbesondere mittels eines Modularen Multilevel-Umrichters (MMC) mit einer als Flying Capacitor (FC) ausgebildeten Umrichterstruktur wird einer begrenzten Sperrspannungsfähigkeit von handelsüblichen Halbleitern bzw. Leistungshalbleitern begegnet und so deren wirtschaftlicher Einsatz für Umrichter mit den genannten Anforderungen ermöglicht. Halbleiter mit einer hohen Sperrspannung verursachen bekannterweise neben den hohen Beschaffungskosten und ggf. Bereitstellungsproblemen auch hohe Durchlassverluste, was diese Halbleiter elektrisch oftmals ineffizient betreibbar macht.

Die Flying Capacitor Topologie hat demnach das Potential, das Gesamtvolumen der für den Umrichter und den Filter benötigten Bauteile in Bezug auf die genannten Anforderungen zu reduzieren.

Kommutierungskondensatoren, welche auch als Entkopplungskondensatoren bezeichnet werden, können i.V.m. einem Kommutierungspfad einer Kommutierungszelle Halbleiter, insbesondere Leistungshalbleiter, bei der Stromkommutierung also der Stromübergabe beispielsweise von einem oberen Halbleiterschalter auf einen unteren Halbleiterschalter eines Brückenzweiges einer Brückenschaltung in einem Flying Capacitor Modul eines Multilevel-Umrichters unterstützen.

Entkoppelt werden sollen mittels der Kommutierungs- bzw. Entkopplungskondensatoren insbesondere auch hohe Frequenzanteile, wie ihn Flying Capacitor Kondensatoren, auch bezeichnet als Zwischenkreiskondensatoren, systemimmanent aufweisen.

Hohe Kommutierungs-Induktivitäten, wie sie oftmals durch ein eher großzügiges Layout bei der Auslegung von beispielsweise Leiterbahnen auf einer Leiterplatte der Kommutierungszelle bzw. des Kommutierungspfades in Kauf genommen werden, erzeugen oft hohe Schaltüberspannungen an den Halbleitern.

Leistungsstarke Vorwiderstände am Gate der Halbleiter können diese Schaltüberspannung begrenzen. Dadurch steigen jedoch auch die Schaltverluste und die Vorteile, wie sie schnell schaltende Halbleiter z.B. für den Einsatz in Umrichtern grundsätzlich bieten, können nicht oder nicht vollständig ausgenutzt werden.

Ein niederinduktiver Kommutierungspfad zur elektrischen Anbindung der Kommutierungskondensatoren an die Halbleiter wird dazu entweder auf einer Seite der Leiterplatte über deren Fläche, also lateral implementiert oder durch die Leiterplatte, als hauptsächlich vertikal implementiert. Die so erzeugten meist großen Spannungsabstände bzw. der hohe Leiterplattenbedarf wird den Anforderungen an ein niederinduktives Design des Kommutierungspfades bzw. der Kommutierungszelle nur ungenügend gerecht.

Der Erfindung liegt die Aufgabe zugrunde, eine Kommutierungszelle, ein Flying Capacitor Modul mit der Kommutierungszelle und einen Multilevel-Umrichter mit dem Flying Capacitor Modul bereitzustellen, welche die bei Kommutierungsvorgängen zwischen Halbleitern auftretenden Schaltverluste mittels eines gegenüber dem Stand der Technik verbesserten niederinduktiven Aufbaus der Kommutierungszelle reduziert.

Die Aufgabe wird durch eine Kommutierungszelle mit den in Anspruch 1 angegebenen Merkmalen, durch ein Flying Capacitor Modul mit den in Anspruch 10 angegebenen Merkmalen und durch einen Multilevel-Umrichter mit den in Anspruch 12 angegebenen Merkmalen gelöst.

Für die Lösung der Aufgabe wird eine Kommutierungszelle für ein Flying Capacitor Modul vorgeschlagen, aufweisend einen ersten Halbleiter mit einem ersten und zweiten Anschluss und einen zweiten Halbleiter mit einem dritten und vierten Anschluss, einen ersten, zweiten, dritten und vierten Kondensator und eine Leiterplatte, wobei der erste Halbleiter in einer ersten Gleichspannungsphase und der zweite Halbleiter in einer zweiten Gleichspannungsphase verschaltet ist, wobei der erste und zweite Kondensator jeweils zwischen dem ersten und dritten Anschluss und der dritte und vierte Kondensator jeweils zwischen dem zweiten und vierten Anschluss parallel zueinander verschaltet sind, wobei auf einer ersten Seite der Leiterplatte der erste und dritte Kondensator und auf einer der ersten Seite abgewandten zweiten Seite der Leiterplatte der zweite und vierte Kondensator angeordnet sind, wobei die Kondensatoren auf der ersten Seite mit den Kondensatoren auf der zweiten Seite mittels Durchkontaktierungen an den Anschlüssen verschaltet sind und wobei mittels Verschaltung und Anordnung der Kondensatoren ein erster Kommutierungspfad auf der ersten Seite und ein zweiter, dritter und vierter Kommutierungspfad entlang der Durchkontaktierungen und auf der ersten und zweiten Seite ausgebildet sind.

Das so erzielte Design der sehr nahe nebeneinander bzw. gegenüberliegend angeordneten Kondensatorpaare der Kommutierungspfade mittels der lateralen Kommutierung über die nur begrenzt in Anspruch genommenen Flächen der ersten und zweiten Seite der Leiterplatte in Kombination mit einer durch die Leiterplatte geführte Kommutierung ermöglicht eine sehr vorteilhafte niederinduktive elektrische Anbindung der Halbleiter an die Kondensatoren des Kommutierungspfades. Der Spannungsabstand über den Halbleitern ist mittels dieses Aufbaus wesentlich geringer als über den Kondensatoren.

Parasitäre Kommutierungsinduktivität und damit verbundene Schalverluste können nunmehr wesentlich reduziert werden.

Vorteilhafte Ausgestaltungsformen der Kommutierungszelle sind in den abhängigen Ansprüchen angegeben.

Bei einer ersten vorteilhaften Ausgestaltungsform der Kommutierungszelle sind die beiden Halbleiter auf einer der beiden Seiten der Leiterplatte angeordnet.

Bei einer weiteren vorteilhaften Ausgestaltungsform der Kommutierungszelle ist der erste Halbleiter auf der ersten Seite und der zweite Halbleiter auf der zweiten Seite der Leiterplatte angeordnet.

Beide Anordnungsmöglichkeiten der Halbleiter auf einer der beiden Seiten der Leiterplatte bieten weitere vorteilhafte Kombinationsmöglichkeiten für die Anbindung der Halbleiter an die Kondensatorpaare der einzelnen Kommutierungspfade.

Bei einer weiteren vorteilhaften Ausgestaltungsform der Kommutierungszelle sind die Anschlüsse der beiden Halbleiter mehrteilig ausgebildet.

Die Ausbildung von mehrteiligen Anschlüssen, insbesondere für die Leistungsanschlüsse Drain und Source beim Einsatz von MOSFETs oder die Leistungsanschlüsse Kollektor und Emitter beim Einsatz von IGBTs ermöglichen in vorteilhafter Weise ein aufwandsarmes paralleles Verschalten eines oder mehrerer Kondensatorpaare.

Bei einer weiteren vorteilhaften Ausgestaltungsform der Kommutierungszelle sind die beiden Halbleiter GaN-Halbleiter.

Mittels GaN-Halbleiterschaltern können beispielsweise im Vergleich zu Halbleitern aus Si hohe Schaltfrequenzen beim Schalten erzielt werden. Der sehr niederinduktive Aufbau unterstützt dieses Merkmal, indem keine leistungsstarken Vorwiderstände am Gate der GaN-Halbleiter eingesetzt werden müssen, um hohe Schaltüberspannungen auf Grund parasitärer Kommutierungsinduktivitäten vermeiden zu müssen. Hohe Schaltüberspannungen erfordern im Allgemeinen eine Herabsetzung der Schaltfrequenz auch der GaN-Halbleiter.

Bei einer weiteren vorteilhaften Ausgestaltungsform der Kommutierungszelle weist der erste Kommutierungspfad den ersten und dritten Kondensator, der zweite Kommutierungspfad den zweiten und den vierten Kondensator, der dritte Kommutierungspfad den zweiten und den dritten Kondensator und der vierte Kommutierungspfad den ersten und den vierten Kondensator als jeweils benachbarte Kondensatoren für die Kommutierungsvorgänge auf.

Die benachbarten Kondensatoren werden so in vorteilhafter Weise räumlich im Allgemeinen parallel nebeneinander angeordnet. Das reduziert den Leitungswiderstand der benachbarten Kondensatoren erheblich und hilft, die parasitären Induktivitäten zu verringern.

Bei einer weiteren vorteilhaften Ausgestaltungsform der Kommutierungszelle ist die Anordnung der jeweils benachbarten Kondensatoren der Kommutierungspfade derart ausgebildet, dass während der Kommutierungsvorgänge ein Strom durch die benachbarten Kondensatoren in jeweils entgegengesetzte Richtungen fließt.

Mittels der entgegengesetzten Richtungen der Stromführung zu den und durch die jeweils benachbarten Kondensatoren kann eine vorteilhafte Kompensation von Kopplungs-Induktivitäten bzw. parasitären Induktivitäten erfolgen. Die Verringerung dieser Induktivitäten verringert die Schaltverluste der Halbleiter.

Bei einer weiteren vorteilhaften Ausgestaltungsform der Kommutierungszelle sind erste Abschnitte der Kommutierungspfade, welche entlang der Durchkontaktierungen durch die Leiterplatte geführt werden, im Wesentlichen orthogonal zu zweiten Abschnitten der Kommutierungspfade angeordnet, welche entlang der ersten oder zweiten Seite der Leiterplatte geführt werden.

Die daraus folgende, im Wesentlichen orthogonale Ausrichtung der Durchkontaktierungen in Bezug zu den Oberflächen der beiden Seiten stellt vorteilhaft sicher, dass der Kommutierungspfad einen möglichst kurzen Weg durch die Leiterplatte nimmt, somit die betroffenen Abschnitten auch besonders niederinduktiv ausgebildet werden können.

Bei einer weiteren vorteilhaften Ausgestaltungsform der Kommutierungszelle sind die Kondensatoren als Kommutierungskondensatoren ausgebildet.

Kommutierungkondensatoren weisen oft in vorteilhafter Weise eine sehr niedrige Induktivität auf, was eine Gesamtreduktion der parasitären Induktivitäten in den Kommutierungspfaden entgegenkommt. Ferner weisen Kommutierungkondensatoren eine hohe Spitzenstrombelastbarkeit auf.

Für die Lösung der Aufgabe wird weiterhin ein Flying Capacitor Modul mit einer erfindungsgemäßen Kommutierungszelle vorgeschlagen, wobei parallel zu dem ersten und zweiten Kondensator an einer Eingangsseite der Kommutierungszelle ein erster Flying Capacitor Kondensator zwischen der ersten und der zweiten Gleichspannungsphase verschaltet ist, wobei parallel zu dem dritten und vierten Kondensator an einer Ausgangsseite der Kommutierungszelle ein zweiter Flying Capacitor Kondensator zwischen der ersten und der zweiten Gleichspannungsphase verschaltet ist, wobei parallel zu dem zweiten Flying Capacitor Kondensator, von dem zweiten Flying Capacitor Kondensator und der Ausgangsseite der Kommutierungszelle abgewandt, zwischen der ersten und der zweiten Gleichspannungsphase ein dritter und ein vierter Halbleiter in Reihe geschaltet sind und wobei zwischen dem dritten und vierten Halbleiter ein Mittelabgriff für eine erste Wechselspannungsphase ausgebildet ist.

Bei einer vorteilhaften Ausgestaltungsform des Flying Capacitor Moduls weist das Flying Capacitor Modul mindesten eine weitere Kommutierungszelle auf, welche als Kommutierungszelle ausgebildet ist, wobei die weitere Kommutierungszelle parallel zum erster Flying Capacitor Kondensator und analog zur Kommutierungszelle an der ersten und der zweiten Gleichspannungsphase verschaltet ist, wobei der erste Flying Capacitor Kondensator zwischen der weiteren Kommutierungszelle und der Kommutierungszelle angeordnet ist und wobei ein weiterer Flying Capacitor Kondensator parallel und eingangsseitig zur weiteren Kommutierungszelle zwischen der ersten und der zweiten Gleichspannungsphase verschaltet ist.

Für die Lösung der Aufgabe wird ebenfalls ein Multilevel-Umrichter mit einem erfindungsgemäßen Flying Capacitor Modul vorgeschlagen, wobei die Gleichspannungsphasen des Flying Capacitor Moduls mit einem Gleichspannungszwischenkreis des Multilevel-Umrichters verbunden sind, wobei die erste Wechselspannungsphase mit einer Wechselspannungsleitung verbindbar ist und wobei das Flying Capacitor Modul über den Gleichspannungszwischenkreis und eine Versorgungsleitung mit einem Versorgungsnetz und über die Wechselspannungsleitung mit einem Energieverbraucher oder einem Energieerzeuger verbindbar ist.

Bei einer vorteilhaften Ausgestaltungsform des Multilevel-Umrichters weist der Multilevel-Umrichter ein jeweils als Flying Capacitor Modul ausgebildetes zusätzliches zweites und drittes Flying Capacitor Modul auf, wobei das zweite und dritte Flying Capacitor Modul jeweils über deren erste und zweite Gleichspannungsphase mit dem Gleichspannungszwischenkreis des Multilevel-Umrichters verbunden sind, wobei das zweite Flying Capacitor Modul eine zweite Wechselspannungsphase und das dritte Flying Capacitor Modul eine dritte Wechselspannungsphase aufweist, wobei die zweite und dritte Wechselspannungsphase jeweils mit der Wechselspannungsleitung verbindbar sind und wobei das zweite und dritte Flying Capacitor Modul jeweils über den Gleichspannungszwischenkreis und die Versorgungsleitung mit dem Versorgungsnetz und über die Wechselspannungsleitung mit dem Energieverbraucher oder dem Energieerzeuger verbindbar sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung einer Schaltung eines Flying Capacitor Moduls mit einer bekannten Kommutierungszelle,
- FIG 2: eine erste schematische Darstellung der Kommutierungszelle nach FIG 1 mit einem einzelnen Kommutierungspfad,
- FIG 3: eine zweite schematische Darstellung der Kommutierungszelle nach FIG 1 mit einem weiteren einzelnen Kommutierungspfad,
- FIG 4: eine schematische Teil-Darstellung einer erfindungsgemäßen Kommutierungszelle,
- FIG 5: eine erste ergänzende schematische Teil-Darstellung der erfindungsgemäßen Kommutierungszelle zur FIG 4,
- FIG 6: eine zweite ergänzende schematische TeilDarstellung der erfindungsgemäßen Kommutierungszelle zur FIG 4 und FIG 5,
- FIG 7: eine dritte ergänzende schematische TeilDarstellung der erfindungsgemäßen Kommutierungszelle zur FIG 4 und FIG 5,
- FIG 8: eine schematische Darstellung einer Schaltung eines erfindungsgemäßen Flying Capacitor Moduls mit der erfindungsgemäßen Kommutierungszelle gemäß FIG 4 bis FIG 7 und
- FIG 9: eine schematische Darstellung eines erfindungsgemäßen Multilevel-Umrichters mit einem erfindungsgemäßen Flying Capacitor Modul und der erfindungsgemäßen Kommutierungszelle des Flying Capacitor Moduls zum Betrieb eines Energieerzeuger oder Energieverbrauchers mittels des Multilevel-Umrichters an einem Versorgungsnetz.

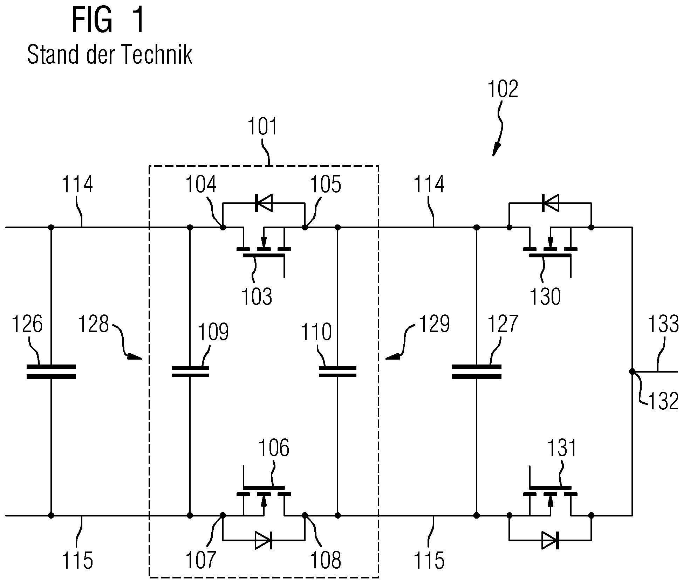

Die FIG 1 zeigt eine schematische Darstellung einer Schaltung eines Flying Capacitor Moduls 102 mit einer bekannten Kommutierungszelle 101. Dieses Flying Capacitor Modul 102 kann drei Spannungslevel erzeugen und wird daher als 3-Level Flying Capacitor Modul 102 bezeichnet.

Die Kommutierungszelle 101 umfasst hier in der Schaltung der FIG 1 einen ersten Halbleiter 103 mit einem ersten und zweiten Anschluss 104,105 und einen zweiten Halbleiter 106 mit einem dritten und vierten Anschluss 107,108. Ferner weist die Kommutierungszelle 101 in dieser Schaltung noch einen ersten und zweiten Kondensator 109,110 auf.

Der erster Halbleiter 103 ist in einer ersten Gleichspannungsphase 114 und der zweiter Halbleiter 106 in einer zweiten Gleichspannungsphase 115 verschaltet.

Der erste Kondensator 109 ist zwischen dem ersten und dritten Anschluss 104,107 und der zweite Kondensator 110 zwischen dem zweiten und vierten Anschluss 105,108 verschaltet.

An einer Eingangsseite 128 der Kommutierungszelle 101, und parallel zu dem ersten Kondensator 109 der Kommutierungszelle 101, ist zwischen der ersten Gleichspannungsphase 114 und der zweiten Gleichspannungsphase 115 ein erster Flying Capacitor Kondensator 126 verschaltet.

An einer Ausgangsseite 129 der Kommutierungszelle 101, und parallel zu dem zweiten Kondensator 110 der Kommutierungszelle 101, ist zwischen der ersten Gleichspannungsphase 114 und der zweiten Gleichspannungsphase 115 ein zweiter Flying Capacitor Kondensator 127 verschaltet.

Parallel zu dem zweiten Flying Capacitor Kondensator 127, von der Ausgangsseite der Kommutierungszelle 101 und dem zweiten Flying Capacitor Kondensator 127 abgewandt, sind zwischen der ersten und der zweiten Gleichspannungsphase 114,115 ein dritter und ein vierter Halbleiter 130,131 in Reihe geschaltet.

Zwischen dem dritten und vierten Halbleiter 130,131 ist ein Mittelabgriff 132 für eine Verbindung mit einer erste Wechselspannungsphase 133 ausgebildet.

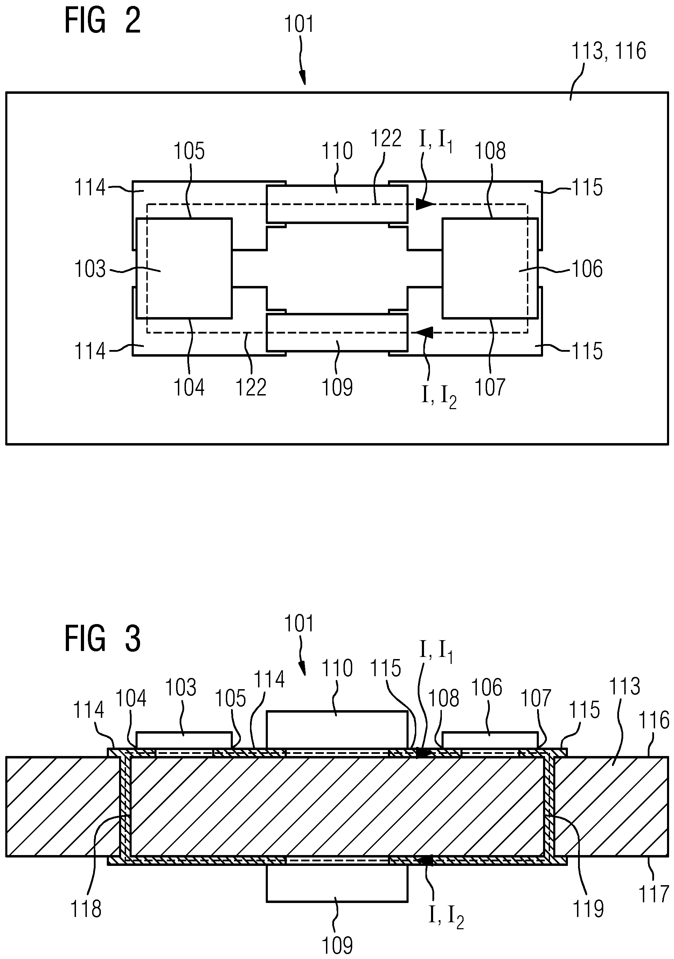

Mit der FIG 2 wird eine erste schematische Darstellung der Kommutierungszelle 101 nach FIG 1 mit einem Kommutierungspfad 122 aufgezeigt. Die Verschaltung der Kommutierungszelle 1 mit den in FIG 2 aufgezeigten Bauelementen, welche hier auf einer ersten Seite 116 einer Leiterplatte 113 angeordnet sind, ist analog der FIG 1 zu entnehmen.

Der Kommutierungspfad 122 ist lateral entlang der ersten Seite 116 der Leiterplatte 113 ausgebildet und zeigt darüber hinaus zwei entgegengesetzte Richtungen I₁,I₂ eines entlang des Kommutierungspfads 122 fließenden Stroms I.

Die FIG 3 offenbart eine zweite schematische Darstellung der Kommutierungszelle nach FIG 1 mit einem weiteren Kommutierungspfad 123. Die Verschaltung der Kommutierungszelle 1 mit den in FIG 3 aufgezeigten Bauelementen, welche hier auf einer ersten und zweiten Seite 116,117 einer Leiterplatte 113 angeordnet sind, ist analog der FIG 1 zu entnehmen.

Der erste und der zweite Halbleiter 103,105 sowie der zweite Kondensator 110 sind hier im Ausführungsbeispiel auf der ersten Seite 116 der Leiterplatte 113 angeordnet. Der erste Kondensator 109 ist auf einer zweiten Seite 117 der Leiterplatte 113 angeordnet. Die Verschaltung der Bauelement erfolgt über eine erste und eine zweite Durchkontaktierung 118,119.

Der Kommutierungspfad 123 ist lateral entlang der ersten und der zweiten Seite 116,117 der Leiterplatte 113 sowie orthogonal dazu über die erste und die zweite Durchkontaktierung 118,119 ausgebildet und zeigt darüber hinaus zwei entgegengesetzte Richtungen I₁,I₂ eines entlang des Kommutierungspfads 123 fließenden Stroms I.

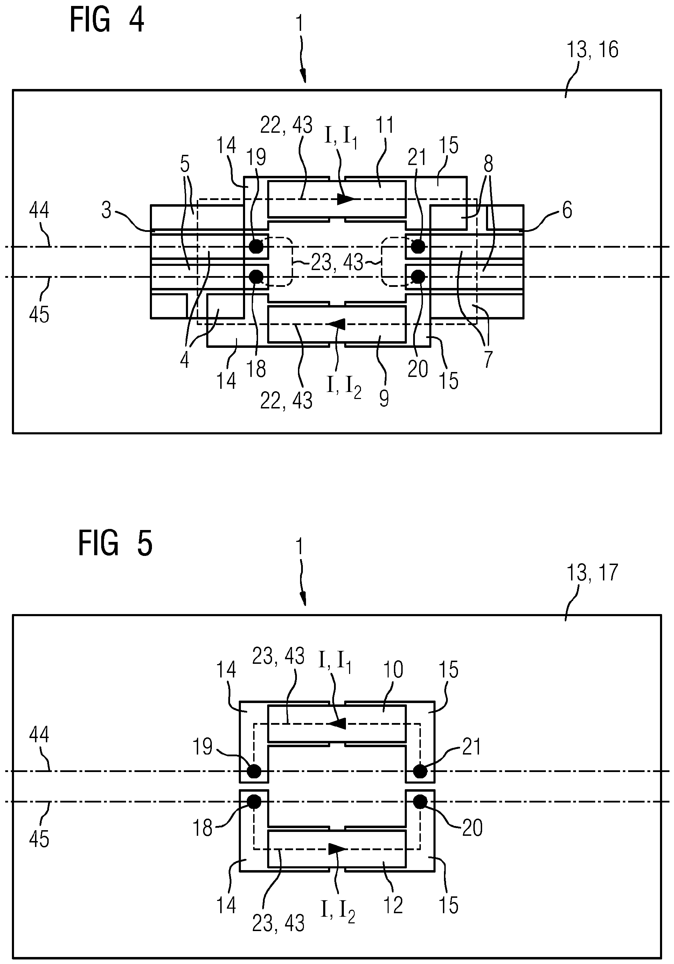

Mittels der FIG 4 wird eine schematische Teil-Darstellung einer erfindungsgemäßen Kommutierungszelle 1 aufgezeigt.

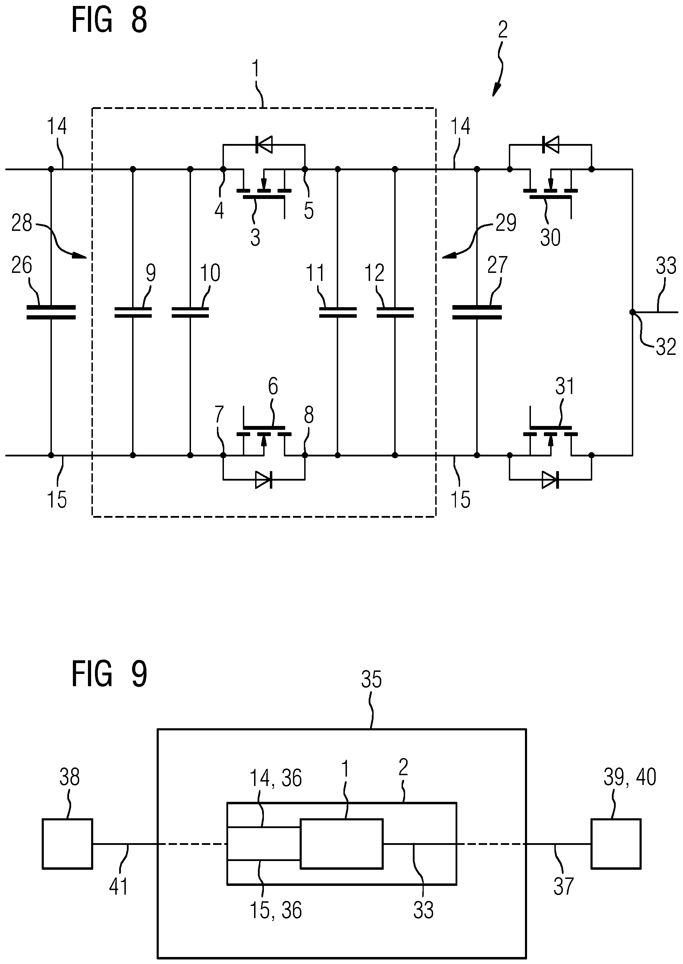

Die Gesamtdarstellung der erfindungsgemäßen Kommutierungszelle 1 umfasst die Figuren 4 bis 7. Das Schaltbild der Kommutierungszelle 1 zu den Figuren 4 bis 7 kann der FIG 8 entnommen werden.

Auf deiner ersten Seite 16 einer Leiterplatte 13 sind ein erster und ein zweiter Halbleiter 3,6 und ein erster und ein dritter Kondensator 9,11 angeordnet und elektrisch verschaltet.

Der erste Halbleiter 3 ist in der ersten Gleichspannungsphase 14 und der zweite Halbleiter 6 ist in der zweiten Gleichspannungsphase 15 verschaltet. Der erste Kondensator 9 ist zwischen dem ersten Anschluss 4 des ersten Halbleiters 3 und dem dritten Anschluss 7 des zweiten Halbleiters 6 verschaltet. Der dritte Kondensator 11 ist zwischen dem zweiten Anschluss 5 des ersten Halbleiters 3 und dem vierten Anschluss 8 des zweiten Halbleiters 6 verschaltet.

Ein erster Kommutierungspfad 24 ist in FIG 4 mit seinen zweiten Abschnitten 43 vollständig lateral entlang der ersten Seite 16 der Leiterplatte 13 ausgebildet und zeigt im ersten Kommutierungspfad 22 darüber hinaus zwei entgegengesetzte Richtungen I₁,I₂ des in den Kondensatoren 9,11 fließenden Stroms I.

Ein zweiter Kommutierungspfad 23 ist in FIG 4 mit seinen zweiten Abschnitten 43 zumindest teilweise lateral entlang der ersten Seite 16 der Leiterplatte 13 ausgebildet. Über Durchkontaktierungen 18,19,20,21 wird der zweite Kommutierungspfad 23 auf eine der ersten Seite 16 der Leiterplatte 13 abgewandten zweiten Seite der Leiterplatte 13 (in FIG 4 nicht gezeigt) geführt, welche der FIG 5 zu entnehmen ist.

Die FIG 5 offenbart eine erste ergänzende schematische Teil-Darstellung der erfindungsgemäßen Kommutierungszelle 1 zur FIG 4.

Gezeigt wird in FIG 5 die zweite Seite 17 der Leiterplatte 13, welche mit der in FIG 4 gezeigten Leiterplatte 13 korrespondiert. Die FIG 5 ist dabei aus der gleichen Perspektive (von Oben) zu betrachten wie die FIG 4, derart, als ob die Leiterplatte 13 transparent wäre.

Über die Durchkontaktierungen 18,19,20,21 sind ein zweiter Kondensator 10 und ein vierter Kondensator 12 mit den auf der ersten Seite 16 der Leiterplatte 13 angeordneten Bauteilen elektrisch verbunden.

Dabei sind der zweite und vierte Kondensator 10,12 parallel zwischen der ersten Gleichspannungsphase 14 und der zweiten Gleichspannungsphase 15 verschaltet.

Der zweiter Kommutierungspfad 23 ist in FIG 5 mit seinen zweiten Abschnitten 43 lateral entlang der zweiten Seite 17 der Leiterplatte 13 ausgebildet und zeigt darüber hinaus in dem zweiten Kommutierungspfad 23 zwei entgegengesetzte Richtungen I₁,I₂ des in den Kondensatoren 10,12 fließenden Stroms I.

Über die Durchkontaktierungen 18,19,20,21 wird der zweite Kommutierungspfad 23 auf die ersten Seite 16 der Leiterplatte 13 (in FIG 4) nicht gezeigt) geführt, welche der FIG 4 zu entnehmen ist.

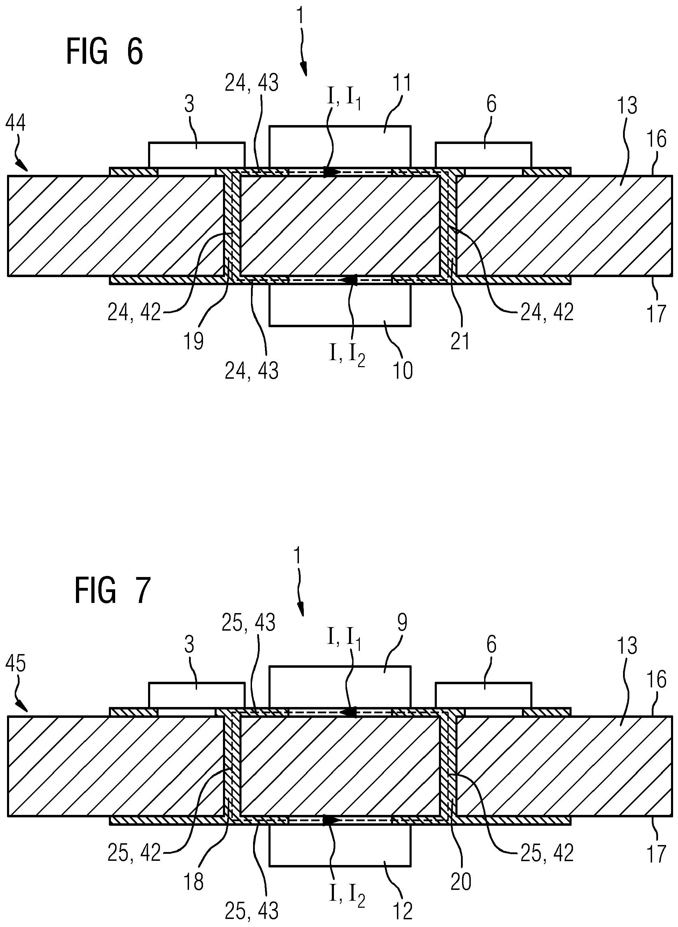

In den Figuren 4 und 5 wird jeweils eine erste und eine zweite Schnittline 44,45 aufgezeigt, wobei die erste Schnittlinie 44 mit einer Schnittdarstellung in FIG 6 und die zweite Schnittlinie 45 mit einer Schnittdarstellung in FIG 7 korrespondiert.

Mit der FIG 6 wird eine zweite ergänzende schematische Teil-Darstellung der erfindungsgemäßen Kommutierungszelle 1 zur FIG 4 und FIG 5 dargestellt.

FIG 6 entspricht einer Schnittdarstellung an der ersten Schnittlinie 44 aus FIG 4 und FIG 5.

Die elektrische Verschaltung der beiden Halbleiter 3 und 6 sowie der beiden Kondensatoren 10,11 kann auch der in FIG 8 dargestellten Schaltung entnommen werden.

Einzig der zweite Kondensator 10 ist auf der zweiten Seite 17 der Leiterplatte 13 angeordnet.

Zu sehen ist in FIG 6 ein dritter Kommutierungspfad 24, welcher durch die Durchkontaktierungen 19,21, die beiden Halbleiter 3,6 und den zweiten und den dritten Kondensator 10,11 verläuft.

Der dritte Kommutierungspfad 24 ist mit seinen zweiten Abschnitten 43 lateral entlang der ersten und zweiten Seite 16,17 der Leiterplatte 13 aber mit seinen ersten Abschnitten 42 mittels der Durchkontaktierungen 19,21 durch die Leiterplatte 13 auch orthogonal ausgebildet. Darüber hinaus zeigt der dritte Kommutierungspfad 24 zwei entgegengesetzte Richtungen I₁,I₂ des in den Kondensatoren 10,11 fließenden Stroms I.

Die FIG 7 zeigt eine dritte ergänzende schematische Teil-Darstellung der erfindungsgemäßen Kommutierungszelle zur FIG 4 und FIG 5.

FIG 7 entspricht einer Schnittdarstellung an der zweiten Schnittlinie 45 aus FIG 4 und FIG 5.

Die elektrische Verschaltung der beiden Halbleiter 3 und 6 sowie der beiden Kondensatoren 9 und 10 kann auch der in FIG 8 dargestellten Schaltung entnommen werden.

Zu sehen ist in FIG 7 ein vierter Kommutierungspfad 25, welcher durch die Durchkontaktierungen 18,20, die beiden Halbleiter 3,6 und den ersten und vierten Kondensator 9,12 verläuft.

Einzig der vierte Kondensator 12 ist auf der zweiten Seite 17 der Leiterplatte 13 angeordnet.

Der vierte Kommutierungspfad 25 ist mit seinen zweiten Abschnitten 43 lateral entlang der ersten und zweiten Seite 16,17 der Leiterplatte 13 aber mit seinen ersten Abschnitten 42 mittels der Durchkontaktierungen 18,20 durch die Leiterplatte 13 auch orthogonal ausgebildet. Darüber hinaus zeigt der vierte Kommutierungspfad 25 zwei entgegengesetzte Richtungen I₁,I₂ des in den Kondensatoren 9,12 fließenden Stroms I.

In der FIG 8 wird eine schematische Darstellung einer Schaltung eines erfindungsgemäßen Flying Capacitor Moduls 2 mit der erfindungsgemäßen Kommutierungszelle 1 gemäß FIG 4 bis FIG 7 aufgezeigt.

Die Kommutierungszelle 101 umfasst hier in der Schaltung der FIG 8 einen ersten Halbleiter 3 mit einem ersten und zweiten Anschluss 4,5 und einen zweiten Halbleiter 6 mit einem dritten und vierten Anschluss 7,8. Ferner weist die Kommutierungszelle 101 in dieser Schaltung noch einen ersten, zweiten, dritten und vierten Kondensator 9,10,11,12 auf.

Der erster Halbleiter 3 ist in einer ersten Gleichspannungsphase 14 und der zweite Halbleiter 6 in einer zweiten Gleichspannungsphase 15 verschaltet.

Der erste und der zweite Kondensator 9,10 sind untereinander parallel zwischen dem ersten und dritten Anschluss 4,7 und der dritte und vierte Kondensator 11,12 untereinander parallel zwischen dem zweiten und vierten Anschluss 5,8 verschaltet.

An einer Eingangsseite 28 der Kommutierungszelle 1, und parallel zu dem ersten Kondensator 9 der Kommutierungszelle 1, ist zwischen der ersten Gleichspannungsphase 14 und der zweiten Gleichspannungsphase 15 ein erster Flying Capacitor Kondensator 26 verschaltet.

An einer Ausgangsseite 29 der Kommutierungszelle 1, und parallel zu dem vierten Kondensator 12 der Kommutierungszelle 1, ist zwischen der ersten Gleichspannungsphase 14 und der zweiten Gleichspannungsphase 15 ein zweiter Flying Capacitor Kondensator 27 verschaltet.

Parallel zu dem zweiten Flying Capacitor Kondensator 27, von der Ausgangsseite der Kommutierungszelle 1 und dem zweiten Flying Capacitor Kondensator 27 abgewandt, sind zwischen der ersten und der zweiten Gleichspannungsphase 14,15 ein dritter und ein vierter Halbleiter 30,31 in Reihe geschaltet.

Zwischen dem dritten und vierten Halbleiter 30,31 ist ein Mittelabgriff 32 für eine Verbindung mit einer erste Wechselspannungsphase 33 ausgebildet.

Die FIG 9 offenbart eine schematische Darstellung eines erfindungsgemäßen Multilevel-Umrichters 35 mit einem erfindungsgemäßen Flying Capacitor Modul 2 und der erfindungsgemäßen Kommutierungszelle 1 des Flying Capacitor Moduls 2 zum Betrieb eines Energieverbrauchers 39 oder Energieerzeugers 40 mittels des Multilevel-Umrichters 35 an einem Versorgungsnetz 38.

In diesem Ausführungsbeispiel weist der Multilevel-Umrichters 35 ein Flying Capacitor Modul 2 für den einphasigen Betrieb auf, wobei das Flying Capacitor Modul 2 zumindest eine Kommutierungszelle 1, wie sie z.B. für einen 3-Level-Betrieb benötigt wird, auf. Die Kommutierungszelle 1 ist über die erste und die zweite Gleichspannungsphase 14,15 mit dem Gleichspannungszwischenkreis 36 am bzw. im Flying Capacitor Modul 2 verbunden.

Ob vom Versorgungsnetz 38 über die Versorgungsleitung 41 dem Multilevel-Umrichters 35 und demnach auch dem Flying Capacitor Modul 2 eine Gleichspannung bereitgestellt wird, welche bestenfalls ohne Wandlung in den Gleichspannungszwischenkreis 35 eingespeist werden kann, oder ob erst eine Wandlung der elektrischen Energie von einer Wechselspannung aus dem Versorgungsnetz 38 in eine Gleichspannung für den Gleichspannungszwischenkreis erfolgen muss, bleibt hier offen. Beides ist möglich.

Über eine Wechselspannungsphase 33 des Flying Capacitor Moduls 2, welches die Kommutierungszelle 1 aufweist, kann mittels der mit dem Multilevel-Umrichters 35 und dem Flying Capacitor Moduls 2 verbundenen Wechselspannungsleitung 37 der Energieverbraucher 39 oder der Energieerzeuger 40 am Versorgungsnetz 38 betrieben werden.

## Patentansprüche

1. Kommutierungszelle (1) für ein Flying Capacitor Modul (2), aufweisend
- einen ersten Halbleiter (3) mit einem ersten und zweiten Anschluss (4,5) und einen zweiten Halbleiter (6) mit einem dritten und vierten Anschluss (7,8),
- einen ersten, zweiten, dritten und vierten Kondensator (9,10,11,12) und
- eine Leiterplatte (13), wobei
- der erste Halbleiter (3) in einer ersten Gleichspannungsphase (14) und der zweite Halbleiter (6) in einer zweiten Gleichspannungsphase (15) verschaltet ist,
- der erste und zweite Kondensator (9,10) jeweils zwischen dem ersten und dritten Anschluss (4,7) und der dritte und vierte Kondensator (11, 12) jeweils zwischen dem zweiten und vierten Anschluss (5,8) parallel zueinander verschaltet sind,
- auf einer ersten Seite (16) der Leiterplatte (13) der erste und dritte Kondensator (9,11) und auf einer der ersten Seite (16) abgewandten zweiten Seite (17) der Leiterplatte (13) der zweite und vierte Kondensator (10,12) angeordnet sind,
- die Kondensatoren (9,11) auf der ersten Seite (16) mit den Kondensatoren (10,12) auf der zweiten Seite (17) mittels Durchkontaktierungen (18,19,20,21) an den Anschlüssen (4,5,7,8) verschaltet sind und
- mittels Verschaltung und Anordnung der Kondensatoren (9,10,11,12) ein erster Kommutierungspfad (22) auf der ersten Seite (16) und ein zweiter, dritter und vierter Kommutierungspfad (23,24,25) entlang der Durchkontaktierungen (18,19,20,21) und auf der ersten und zweiten Seite (16,17) ausgebildet sind.

2. Kommutierungszelle (1) nach Anspruch 1, wobei beide Halbleiter (3,6) auf einer der beiden Seiten (16,17) der Leiterplatte (13) angeordnet sind.

3. Kommutierungszelle (1) nach Anspruch 1, wobei der erste Halbleiter (3) auf der ersten Seite (16) der Leiterplatte (13) und der zweite Halbleiter (6) auf der zweiten Seite (17) der Leiterplatte (13) angeordnet ist.

4. Kommutierungszelle (1) nach einem der vorhergehenden Ansprüche, wobei die Anschlüsse (4,5,7,8) der beiden Halbleiter (3,6) mehrteilig ausgebildet sind.

5. Kommutierungszelle (1) nach einem der vorhergehenden Ansprüche, wobei die beiden Halbleiter (3,6) GaN-Halbleiter sind.

6. Kommutierungszelle (1) nach einem der vorhergehenden Ansprüche, wobei der erste Kommutierungspfad (22) den ersten und dritten Kondensator (9,11), der zweite Kommutierungspfad (23) den zweiten und den vierten Kondensator (10,12), der dritte Kommutierungspfad (24) den zweiten und den dritten Kondensator (10,11) und der vierte Kommutierungspfad (25) den ersten und den vierten Kondensator (9,12) als jeweils benachbarte Kondensatoren für die Kommutierungsvorgänge aufweist.

7. Kommutierungszelle (1) nach Anspruch 6, wobei die Anordnung der jeweils benachbarten Kondensatoren der Kommutierungspfade (22,23,24,25) derart ausgebildet ist, dass während der Kommutierungsvorgänge ein Strom (I) durch die benachbarten Kondensatoren in entgegengesetzte Richtungen (I₁,I₂) fließt.

8. Kommutierungszelle (1) nach einem der vorhergehenden Ansprüche, wobei erste Abschnitte (42) der Kommutierungspfade (23,24,25), welche entlang der Durchkontaktierungen (18,19,20,21) durch die Leiterplatte (13) geführt werden, orthogonal zu zweiten Abschnitten (43) der Kommutierungspfade (22,23,24,25) angeordnet sind, welche entlang der ersten oder zweiten Seite (16,17) der Leiterplatte (13) geführt werden.

9. Kommutierungszelle (1) nach einem der vorhergehenden Ansprüche, wobei die Kondensatoren (9,10,11,12) als Kommutierungskondensatoren ausgebildet sind.

10. Flying Capacitor Modul (2) mit einer Kommutierungszelle (1) nach einem der Ansprüche 1 bis 9, wobei
- parallel zu dem ersten und zweiten Kondensator (9,10) an einer Eingangsseite (28) der Kommutierungszelle (1) ein erster Flying Capacitor Kondensator (26) zwischen der ersten und der zweiten Gleichspannungsphase (14,15) verschaltet ist,
- parallel zu dem dritten und vierten Kondensator (11,12) an einer Ausgangsseite (29) der Kommutierungszelle (1) ein zweiter Flying Capacitor Kondensator (27) zwischen der ersten und der zweiten Gleichspannungsphase (14,15) verschaltet ist,
- parallel zu dem zweiten Flying Capacitor Kondensator (27), von dem zweiten Flying Capacitor Kondensator (27) und der Ausgangsseite (29) der Kommutierungszelle (1) abgewandt, zwischen der ersten und der zweiten Gleichspannungsphase (14,15) ein dritter und ein vierter Halbleiter (30,31) in Reihe geschaltet sind und
- zwischen dem dritten und vierten Halbleiter (30,31) ein Mittelabgriff (32) für eine erste Wechselspannungsphase (33) ausgebildet ist.

11. Flying Capacitor Modul (2) nach Anspruch 10, mit mindestens einer weiteren Kommutierungszelle, welche als Kommutierungszelle (1) ausgebildet ist, wobei
- die weitere Kommutierungszelle parallel zum erster Flying Capacitor Kondensator (26) und analog der Kommutierungszelle (1) an der ersten und der zweiten Gleichspannungsphase (14,15) verschaltet ist,
- der erster Flying Capacitor Kondensator (26) zwischen der weiteren Kommutierungszelle und der Kommutierungszelle (1) angeordnet ist und
- ein weiterer Flying Capacitor Kondensator parallel und eingangsseitig zur weiteren Kommutierungszelle zwischen der ersten und der zweiten Gleichspannungsphase (14,15) verschaltet ist.

12. Multilevel-Umrichter (35) mit einem Flying Capacitor Modul (2) nach einem der Ansprüche 10 oder 11, wobei die Gleichspannungsphasen (14,15) des Flying Capacitor Moduls (2) mit einem Gleichspannungszwischenkreis (36) des Multilevel-Umrichters (35) verbunden sind, wobei die erste Wechselspannungsphase (33) mit einer Wechselspannungsleitung (37) verbindbar ist und wobei das Flying Capacitor Modul (2) über den Gleichspannungszwischenkreis (36) und eine Versorgungsleitung (41) mit einem Versorgungsnetz (38) und über die Wechselspannungsleitung (37) mit einem Energieverbraucher (39) oder einem Energieerzeuger (40) verbindbar ist.

13. Multilevel-Umrichter (35) nach Anspruch 12 mit einem jeweils als Flying Capacitor Modul (2) ausgebildeten zusätzlichen zweiten und dritten Flying Capacitor Modul, wobei
- das zweite und dritte Flying Capacitor Modul jeweils über deren erste und zweite Gleichspannungsphase mit dem Gleichspannungszwischenkreis (36) des Multilevel-Umrichters (35) verbunden ist,
- das zweite Flying Capacitor Modul eine zweite Wechselspannungsphase und das dritte Flying Capacitor Modul eine dritte Wechselspannungsphase aufweist
- die zweite und dritte Wechselspannungsphase jeweils mit der Wechselspannungsleitung (37) verbindbar ist und
- das zweite und dritte Flying Capacitor Modul jeweils über den Gleichspannungszwischenkreis (36) und die Versorgungsleitung (41) mit dem Versorgungsnetz (38) und über die Wechselspannungsleitung (37) mit dem Energieverbraucher (39) oder dem Energieerzeuger (40) verbindbar sind.
